**Europäisches Patentamt**

(19) **European Patent Office**

**Office européen des brevets**

(11) Publication number : **0 265 486 B1**

(12) **EUROPEAN PATENT SPECIFICATION**

(45) Date of publication of patent specification :
05.10.94 Bulletin 94/40

(51) Int. Cl.⁵ : **F25B 19/00**, F25D 19/00,
G01J 5/06

(21) Application number : **87902944.5**

(22) Date of filing : **24.03.87**

(86) International application number :
**PCT/US87/00645**

(87) International publication number :
**WO 87/05990 08.10.87 Gazette 87/22**

(54) MODULAR PHOTON DETECTOR CRYOSTAT ASSEMBLY AND SYSTEM.

(30) Priority : **25.03.86 GB 8607356**
**20.03.87 US 28636**

(43) Date of publication of application :
**04.05.88 Bulletin 88/18**

(45) Publication of the grant of the patent :
**05.10.94 Bulletin 94/40**

(84) Designated Contracting States :
**AT BE CH DE FR GB IT LI LU NL SE**

(56) References cited :
DE-A- 2 162 845
FR-A- 2 123 493
US-A- 3 483 709
US-A- 3 609 992
US-A- 3 611 746
US-A- 3 807 188
US-A- 3 851 173
US-A- 4 218 892
US-A- 4 324 104

(73) Proprietor : **EG & G Instruments, Inc.**
**100 Midland Road**
**Oak Ridge Tennessee 37831 (US)**

(72) Inventor : **MARTIN, Gregory**
**10537 Blakerwood Drive**
**Knoxville, TN 37922 (US)**
Inventor : **BURKE, Michael**
**7506 Belfast Lane**
**Knoxville, TN 37921 (US)**

(74) Representative : **Cline, Roger Ledlie et al**
**EDWARD EVANS & CO.**
**Chancery House**
**53-64 Chancery Lane**
**London WC2A 1SD (GB)**

## Description

This invention relates to cryogenically cooled radiation detectors and more specifically to means in a cryostat for thermally and mechanically connecting a detector to a dewar.

Photon detectors or spectrometers are useful in measuring low low levels of radionuclides. Examples of such measurements include monitoring of the environment and effluent discharge of nuclear power stations, measurement of food product for human intake and evaluation of the natural environment. Because of the radionuclide content of some samples, it has become standard practice to use the resolving power of germanium semiconductor detectors to identify and quantify the isotopes present. Germanium semiconductor gamma-ray spectrometers have been developed to provide optimum performance for such measurement. When x- or gamma rays impinge on a germanium detector, there is a finite probability of an interaction occurring which results in the creation of electron-hole pairs. If the impinging beam has an intensity, I, at a given energy, E, then it is absorbed in the detector according to an exponential law:

$$I(X) = I_o{}^{(-X/\lambda)},$$

where $I_o$ is the beam intensity at the surface of the detector and X is the distance from the surface, and $1/\lambda$ is the absorption coefficient and can be considered as the sum of three components due respectively to the photoelectric, Compton and pair-production processes. When an interaction occurs and electron-hole pairs are created, the electric field due to the bias voltage sweeps out the charge carriers resulting in an induced current pulse which is integrated at the input of a charge-sensitive preamplifier. Both charge carriers, the electrons and the holes, contribute to the current pulse. In order to provide for this operation, the germanium detector must be vacuum-jacketed and cryogenically cool. Normally, such detectors are cooled to below 100°K. A nominal operating temperature is 77°K.

The germanium detector is incorporated in a cryostat. The cryostat comprises an evacuated housing surrounding the detector, the detector itself, a cryogenically cooled field effect transitor preamplifier in the housing, electronics circuit boards exterior to the housing mounted on support means coaxial with and extending from the detector, and means for communicating the detector with a cryogenic cooling source such as liquid nitrogen. Cryostats are provided in various sizes and configurations for various applications. Similarly, different dewars are utilized for varying applications. One form of cryostat may be connected to a dewar having a handle projecting therefrom which is balanced for maintaining the cryostat in a hand-held horizontal disposition. Different dewars may be provided to provide for eight hour or twenty-four hour holding time.

Other dewars may be provided which have cryostats projecting from a top portion, a bottom portion or a side thereof. For different applications, nominal dewars may come in sizes of .4, 1.2, 7.5, 15, 25 or 30 liters. Different specific applications require different combinations of dewar and cryostat. The conventional means for connecting cooling devices to the detector has resulted in construction of a closure in which vacuum-jacket surrounding the detector is the same vacuum jacket that must surround the portion of the cryostat extending from the detector into the dewar and in some cases the dewar vacuum jacket. This widely successfully used and conventional design does not permit modularity of assembly between detector heads and different cryostats or different dewars. The experience in the art is that in reworking of detectors to move them from one cryostat assembly to another, yield rate is low. Consequently, an expensive inventory of cryostats must be maintained for a number of applications.

US-A-3,483,709 discloses a photon detector system comprising two relatively detachable portions, the first portion comprising a vacuum flask having a chamber for holding cryogenic fluid and a vacuum jacket around the chamber, the second portion comprising a detector and a vacuum jacket around the detector, and first and second transition probes for thermally coupling the portions, each probe having a tube, the tube of one probe being constructed and arranged to encircle the tube of the other probe to form an annular chamber therewith, the tubes each having an associated base from which it extends, the base of the one probe connecting the vacuum jacket of the flask to the annular chamber and means mounting the second portion to close the annular chamber, and the base of the other probe being firmly connected to the chamber, a thermally conducting member in the tube of the other probe and thermally connected to the base, a thermal junction connecting said member to a member thermally connected to the detector.

The present invention improves upon this arrangement by the features set out in the characterising clause of claim 1.

An example of the invention will now be described with reference to the accompanying drawings in which:

Figures 1 through 3 are each an elevation partially in cross-sectional form illustrating a system constructed in accordance with the present invention in various stages of assembly;

Figure 4 is an exploded view in axonometric form further illustrating the cooperation of subassemblies in the present invention;

Figures 5 and 6 are partial detailed views of a further form of the present invention further illustrating fluid interfaces within an assembled system; and

Figure 7 is a cross-sectional view of a further form of transition member in a cryostat coupled to a partially illustrated dewar.

## Description of the Preferred Embodiments

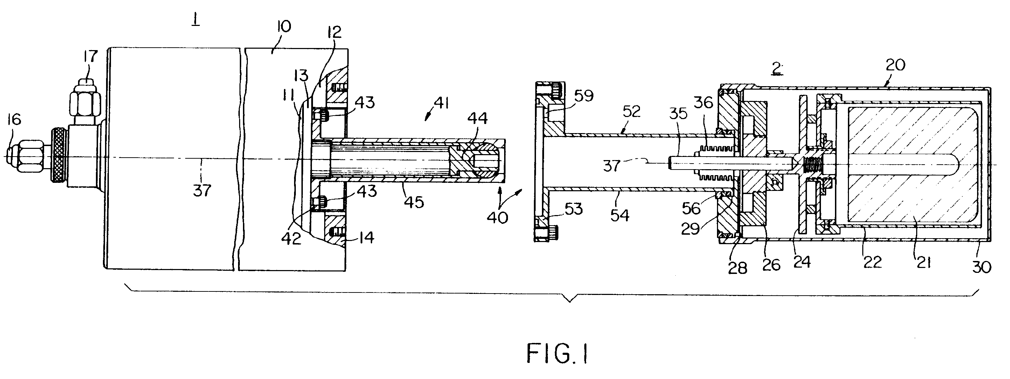

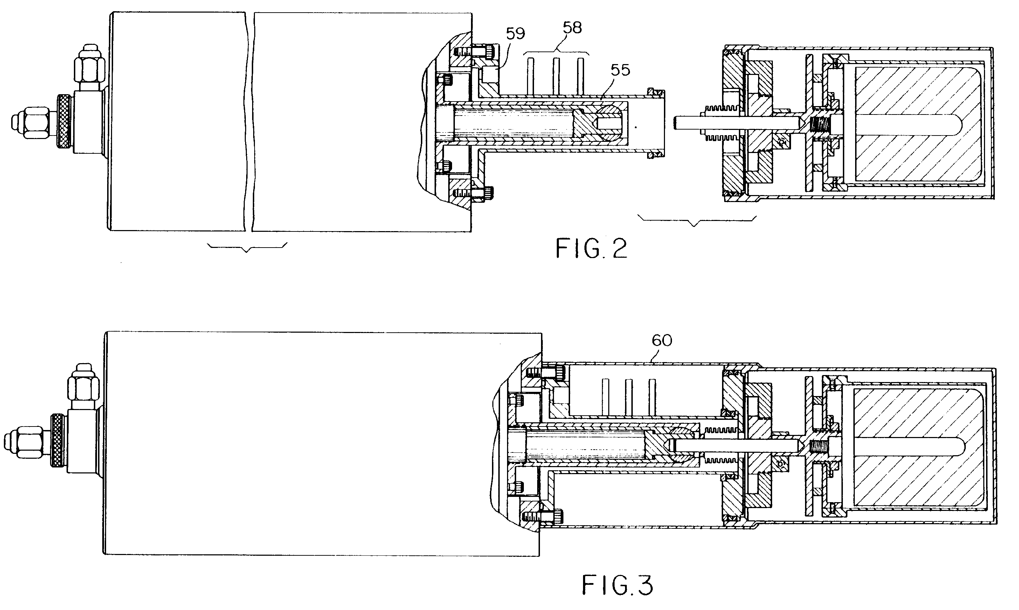

Figures 1 through 3 are each elevation views partially in cross section, each illustrating the same components, the same reference numerals being used for the same components in each Figure. In Figures 1 and 2, differing forms of sub-assembly are illustrated, and in Figure 3, the system is shown in an assembled form ready for operation for radiation detection. The system comprises a dewar 1 and cryostat assembly or cryostat 2. The portions of the system utilized for thermally and mechanically connecting the detector to the dewar may be viewed as part of the cryostat assembly 2 rather than the dewar 1, although such characterization is not critical in understanding operation of the present invention.

The dewar 1 comprises a canister 10 enclosing a central chamber 11 for holding cryogenic liquid enclosed by a wall 13, preferably liquid nitrogen. A concentric vacuum jacket 12 surrounds the chamber 11 and is disposed between the wall 13 and a dewar outer wall 14 having an opening 15. Ports 16 and 17 are provided each respectively communicating with the chamber 11 and vacuum-jacket 12 in a prior art manner for respectively providing cooling liquid and for coupling to a vacuum pump.

A detector head assembly 20 includes a conventional detector 21 comprising a germanium crystal in an enclosure 22. The detector 21 and enclosure 22 are mounted to a platform 24 supported to support means 26 affixed to a base 28 having an external circular recess 29 and closing a detector head housing 30. The entire detector head housing 30 is evacuated. Thermal conduction means 35 extend from outside the detector head housing 30 through the base 28 to make thermal contact with the platform 24 and germanium detector 21. Preferably, the thermal conduction means 35 comprises a copper rod mounted along an axis 37 common to the detector 21, housing 30 and enclosure 22. A bellows 36 seals around the conduction member 35 adjacent one end thereof outside the detector head assembly and sealably engages the base 28 opening into the interior of the housing 30.

The transition means 40 provides for the transition from the dewar 1 to detector head 20 and provide releasable mechanical and thermal connection therebetween and comprises a cooling rod assembly 41 and cooling rod housing assembly 52. These terms are somewhat arbitrary in nature; the necessary characteristics of these elements are further defined as described below. The cooling rod assembly 41 includes a base portion 42 for mounting to the wall 13 of the cooling fluid chamber 11 and in thermal communication therewith by mounting means such as screws 43. A cooling rod 45 projects axially out of the dewar 1 and includes a radially central and an axial end thereof receptacle 44 for mating with and receiving an end of the conduction rod 35. The receptacle 44 is mounted at an end of the cooling rod 43 in a manner to allow for relative thermal expansion and contraction as further described below. The cooling rod 45 may be constructed of a plurality of metals. A cooling rod housing assembly 52 comprises a base 53 for mounting to the outer wall 14 of the dewar 11 facing the cryostat 2 and covering the opening 15.

Extending axially from the base 53 is a cylindrical housing member 54 for mounting coaxially with the arm 45 and the conduction member 35 and defining a chamber 55 therearound. An extremity of the member 54 remote from the base 53 is dimensioned to be received in the recess 29 and sealed by sealing means 56 in the base 28 of the detector assembly housing 30 so that a vacuum may be maintained. When the base 53 is mounted to the wall 14 of the dewar, the chambers 55 and 12 are in fluid communication and define a common sealed chamber.

Electronics circuit boards 58 carrying prior art circuitry and electrically connected to the detector 21 in a prior art manner may be mounted on the radially exterior surface of the member 54. A port 59 may be provided through the base portion 52 to evacuate the volume in which the circuits 58 are placed. As seen in Figure 3 only, a shroud 60 may be mounted concentrically over the detector head assembly 30 and seal the volume between the base 28 of the detector head assembly 20 and the base 53 of the cooling rod housing assembly 52 means so that the entire assembly as illustrated in Figures 1 though 3 is sealed. The receptacle 44 preferably is made out of titanium steel.

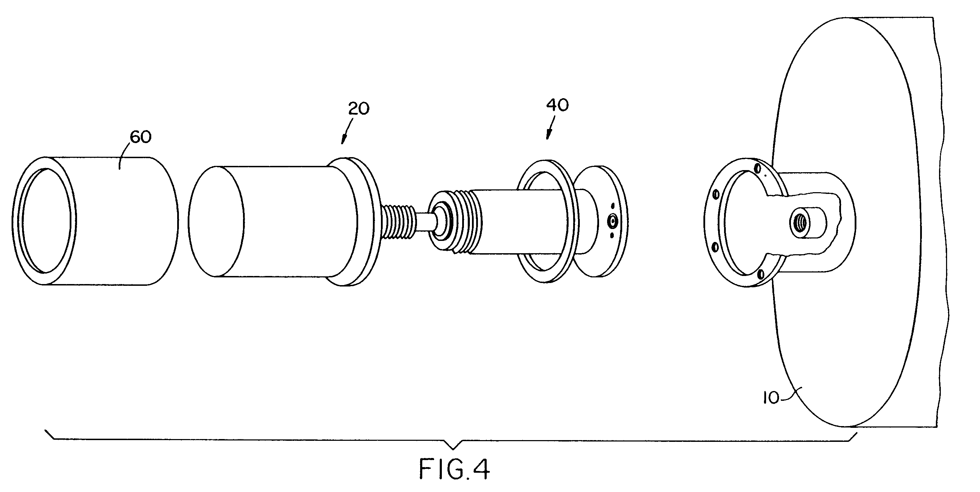

Figure 4 is an exploded axonometric view further illustrating in one form the subassemblies of Figures 1-3.

## Operation

When the detector is assembled as shown in Figure 3, it is ready for use. Evacuation through the port 17 is performed with conventional external means (not shown). Cooling liquid is introduced through the port 16 by conventional means and the entire detector assembly begins to cool. Heat is conducted through the cooling rod 45 and conductions means 35 to remove heat from the detector 21. The detector 21 is cooled to approximately 77°K. The conduction rod 35 and receptacle 44 are proportioned such that the change in thermal coefficient of expansion between the two components will result in radial compressive force being applied from the transition member receptacle 44 to clamp the conduction rod 35 providing for a reliable thermal contact and a reliable mechanical connection as well. If it is desired to move the cryostat 2 to a different dewar 1, a prior art operation to raise the temperature of the cryostat is performed.

The entire cryostat 2 may be removed. While the dewar vacuum is broken, the electronics package is not disturbed. Alternatively, as illustrated in Figure 2, the shroud 60 and detector head assembly 30 may be removed while allowing full access to the electronic circuits 58.

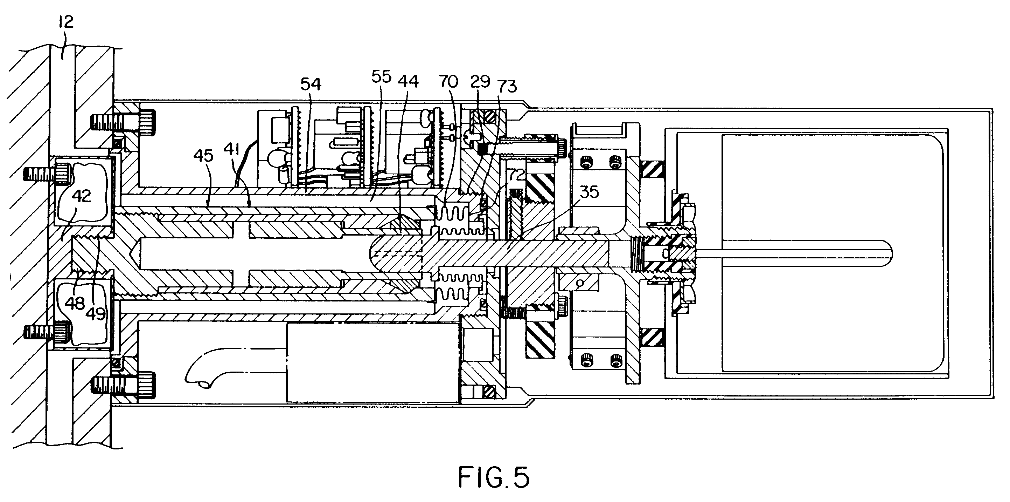

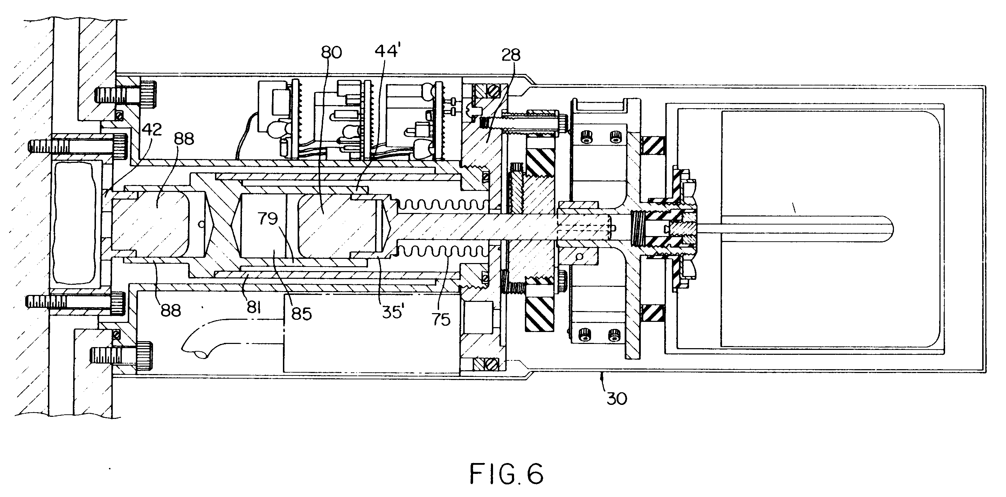

In Figures 5 and 6, which are both elevation views in cross-sectional form, further embodiments are illustrated providing the further advantage of the ability to remove the detector head 30 without breaking the vacuum in the dewar 1 and in the transition means 40. Consequently, after an assembly operation, a user may immediately begin the cooling operation. It is not necessary to perform the intermediate step of evacuating the vacuum-jacket 11 in chambers with which it communicates. In Figures 5 and 6, the same reference numerals are utilized to denote corresponding components in the detector head assembly 30 and the dewar 1. Primed numbers indicate components varying structure from the embodiment of Figures 1-3 but functioning similarly. In the embodiments of Figures 5 and 6, the most significant differences are in the area of the receptacle means 44.

The same reference numerals denote components corresponding to those in Figures 1-4. The rod 45 is formed with a thread 48 to thread into a thread 47 in the base 42. A transition bellows member 70 is further provided disposed to close the evacuatable chamber 55 even when the detector assembly 20 is detached from the cooling rod housing assembly 52 so long as the housing member 54 is fixed with respect to the cooling rod assembly 41. Since chambers 12 and 55 are kept sealed, a user will be able to cool immediately a newly assembled detector system without first vacuum pumping the chambers 55 and 12 with an external pump. A thread 72 may be provided for the axial end of the housing member 54 to the base 28 of the detector head assembly 20. In this embodiment, the recess 29 in the base 28 comprises a thread 73 for receiving the thread 72.

In the embodiment of Figure 5, a thermal clamp is provided. The difference of thermal coefficient of expansion between titanium and aluminum parts produces a radially directed force from the receptacle means 44 on the conducting rod 35. Preferably the bellows 70 is thin walled stainless steel. In the embodiment of Figure 5, in a nominal embodiment, the necessary air interface between the bellows 70 and the bellows 36 may be as small as 0.15 cubic inch.

In the embodiment of Figure 6, a further form of bellows 75 is provided to close the vacuum path. A cavity 79 in the central portion of the cooling rod 45' is constructed for receiving a double acting cooling rod clamp 80. The double acting cooling rod clamp 80 works in conjunction with a receptacle 44' and a conducting rod 35', each of which have a larger inner diameter than the clamp 80 when the system is at room temperature. The clamp 80 is partially received in an annular end of the conducting rod 35'. The receptacle 44' surrounds an outer diameter of the clamp 80 along a first axial portion and surrounds the annular end of the conducting rod 35' which receives the remainder of the clamp. The clamp member 80 utilizes invar in opposition to aluminum or magnesium instead of titanium in opposition to aluminum. The bellows member 75 is a stainless steel bellows. A sieve pack 85 is placed in the remainder of the cavity also receiving the clamp member 80 for use in creating from atmospheric pressure a vacuum therein. Further, a clamp member 88 may be used to similarly releasably engage the cylinder 43 to the base portion 42 of the transition member 41. A glass fiber-epoxy sleeve extends axially from an area near the clamp 88 to the base 28 of the detector head 30 to define an inner wall of the chamber 55.

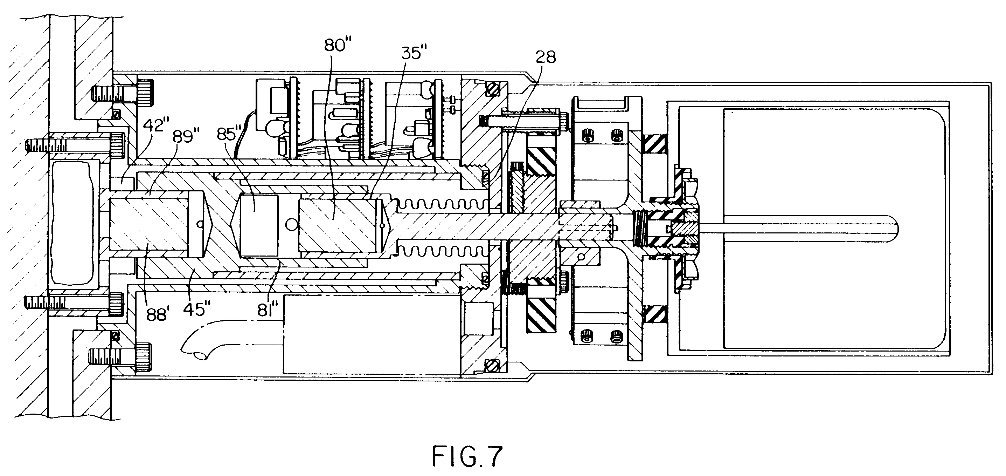

Referring to Figure 7, there is illustrated a further form of transition assembly 40 incorporating a further form of cooling rod 45 referred to in Figure 7 as 45″. The cooling rod 45″ has a first axial portion adjacent to the dewar 1 for mating with a clamp member 88′ The clamp member 88′ is preferably of invar and surrounded by a copper sleeve 89′. The base 42″ is formed to receive a first axial portion of clamp 88′ and sleeve 89′. The remainder thereof is received within a recess in the first axial portion of the cooling rod 45″. A second axial portion of the cooling rod 45″ is of reduced diameter with respect to the first axial portion thereof and is for receiving within a cylindrical recess an end of conducting rod 35″ also having a cylindrical recess. A clamp member 80″ is received in the cylindrical recess at the end of the conducting rod 35″ and is also in axial registration with the second axial end of the cooling rod 45″. The remainder of the cylindrical recess contains a charcoal pack 85″. As the system is cooled to operating temperature, the clamp 80″ forces the cooling rod 45″ into a force fit with the conducting rod 35″ and the charcoal pack 85″ pumps the recess to vacuum.

In the present embodiment, the fiber glass and epoxy sleeve 81′ extending from the first axial portion of the cooling rod 45″ to the portion of the sleeve 52″ received in the recess 28 is bonded thereto.

The specification has been written with a view toward enabling those skilled in the art to produce photon detector assemblies, cryostats, transition assemblies and subassemblies thereof. Other forms of the cooling rod can be provided consistent with the philosophy of maintaining good mechanical and thermal communication between the dewar and conducting rod and maintaining minimal air volume therearound. A vacuum chamber common to the dewar and transition assembly is provided which in some embodiments need not be vented to the atmosphere to provide for change of detector heads. The detector does not have to be removed from its vacuum enclosure to be changed from one cryostat to another or to be moved from cooperation with one dewar to another.

## Claims

1. A photon detector system comprising two relatively detachable portions (1, 2), the first portion comprising a vacuum flask having a chamber (10) for holding cryogenic fluid and a vacuum jacket (12) around the chamber, the second portion comprising a detector (21) and a vacuum jacket (30) around the detector, first and second transition probes (41, 52) for thermally coupling the portions, each probe having a tube, the tube (52) of one probe being constructed and arranged to encircle the tube (45) of the other probe to form an annular chamber (55) therewith, the tubes each having an associated base from which it extends, the base (53) of the one probe connecting the vacuum jacket (12) of the flask to the annular chamber (55), means (28, 29) mounting the second portion to close the annular chamber, the base (42) of the other probe being thermally connected to the chamber (10), a thermally conducting member (44) in the tube of the other probe and thermally connected to the base (42), and a thermal junction connecting said member (44) to a member (35) thermally connected to the detector (21) characterised in that the vacuum jacket (30) is sealed, and the member (44) and member (35) are constructed to have dimensions and thermal coefficients of expansion such that they are releasably engageable at a first, ambient, temperature and that a radial clamping force is applied therebetween after cooling of the member (44) in response to cryogenic fluid in said chamber (10).

2. A system as claimed in claim 1 wherein said thermal junction is formed by said member (44) having an end including a recess for receiving a projection of the member (35).

3. A system as claimed in claim 1 or claim 2 wherein said detector (21) comprises a base portion (28), said conduction member (35) being mounted to said base portion and being surrounded by compression seal means (56) defining said jacket (30).

4. A system as claimed in claim 3 further comprising bellows seal means (36) connected between said base portion (28) and the recessed end of the member (44).

5. A system as claimed in any one of claims 1 to 4 further comprising shroud means (60) surrounding said transition probes (41, 52) and enclosing a volume between said detector means (21) and said chamber (10) for defining a closed chamber therebetween.

6. A system as claimed in claim 5 further comprising circuit means (58) for mounting within said shroud means (60).

7. A system as claimed in any one of claims 1 to 6 wherein said transition probes (41, 52) define three evacuatable chambers, a first chamber comprising said chamber (55), a second chamber comprising space within said tube (45), and a third chamber comprising a chamber interior to said tube (52) and exterior to said means (28, 29).

## Patentansprüche

1. Photonendetektorsystem, welches folgendes umfaßt: zwei relativ abnehmbare Teilstücke (1, 2), wobei das erste Teilstück einen Vakuumkolben mit einer Kammer (10) zum Fassen eines Tieftemperaturfluids und einen die Kammer umgebenden Vakuummantel (12) umfaßt, wobei das zweite Teilstück einen Detektor (21) und einen den Detektor umgebenden Vakuummantel (30) umfaßt, erste und zweite Übergangsfühler (41, 52) zum thermischen Kuppeln der Teilstücke, wobei jeder Fühler eine Röhre aufweist, wobei die Röhre (52) eines Fühlers so ausgeführt und angeordnet ist, daß sie die Röhre (45) des anderen Fühlers zur Bildung einer Ringkammer (55) mit derselben umgibt, wobei die Röhren jeweils einen dazugehörigen Boden, von dem sie ausgehen, aufweisen, wobei der Boden (53) des einen Fühlers den Vakuummantel (12) des Kolbens mit der Ringkammer (55) verbindet, am zweiten Teilstück zum Verschließen der Ringkammer gehalterte Einrichtungen (28, 29), wobei der Boden (42) des anderen Fühlers mit der Kammer (10) thermisch verbunden ist, ein in der Röhre des anderen Fühlers befindliches und mit dem Boden (42) thermisch verbundenes thermisch leitendes Glied (44), und eine das Glied (44) mit einem thermisch mit dem Detektor (21) verbundenen Glied (35) verbindende thermische Verbindung, dadurch gekennzeichnet, daß der Vakuummantel (30) abgedichtet ist, und daß das Glied (44) und das Glied (35) derartige Abmessungen und thermische Ausdehnungskoeffizienten aufweisen, daß sie bei einer ersten Umgebungstemperatur lösbar in Eingriff gebracht werden können, und daß eine radiale Klemmkraft nach dem Abkühlen des Glieds (44) als Reaktion auf das Tieftemperaturfluid in der Kammer (10) zwischen diesen Gliedern aufgebracht wird.

**2.** System nach Anspruch 1, bei dem die thermische Verbindung dadurch gebildet ist, daß das Glied (44) ein eine Aussparung zur Aufnahme eines Vorsprungs des Glieds (35) umfassendes Ende aufweist.

**3.** System nach Anspruch 1 oder Anspruch 2, bei dem der Detektor (21) ein Bodenteilstück (28) umfaßt, wobei das Leitungsglied (35) an dem Bodenteilstück gehaltert und von einer den Mantel (30) bestimmenden Kompressionsdichtungseinrichtung (56) umgeben ist.

**4.** System nach Anspruch 3, welches ferner eine zwischen dem Bodenteilstück (28) und dem mit einer Aussparung versehenen Ende des Glieds (44) gekoppelte Federbalgeinrichtung (36) umfaßt.

**5.** System nach einem der Ansprüche 1 bis 4, welches ferner eine die Übergangsfühler (41, 52) umgebende und ein Volumen zwischen der Detektoreinrichtung (21) und der Kammer (10) zum Bestimmen einer dazwischenliegenden abgeschlossenen Kammer einschließende Abschirmeinrichtung (60) umfaßt.

**6.** System nach Anspruch 5, welches ferner eine Schaltungseinrichtung (58) zur Anbringung innerhalb der Abschirmeinrichtung (60) umfaßt.

**7.** System nach einem der Ansprüche 1 bis 6, bei dem die Übergangsfühler (41, 52) drei evakuierbare Kammern bestimmen, wobei eine erste Kammer die Kammer (55) umfaßt, eine zweite Kammer einen Raum innerhalb der Röhre (45) umfaßt, und eine dritte Kammer eine innerhalb der Röhre (52) und außerhalb der Einrichtungen (28, 29) liegende Kammer umfaßt.

**Revendications**

**1.** Système de détecteur de photons comprenant deux portions relativement détachables (1, 2), la première portion comprenant un flacon à vide possèdant une enceinte (10) pour contenir du fluide cryogénique et une chemise à vide (12) autour de l'enceinte, la seconde portion comprenant un détecteur (21) et une chemise à vide (30) autour du détecteur, des premier et second capteurs de transition (41, 52) pour l'accouplement thermique des portions, chaque capteur possédant un tube, le tube (52) d'un capteur étant construit et agencé pour encercler le tube (45) de l'autre capteur pour former une enceinte annulaire (55) avec celui-là, les tubes possédant chacun une base associée à partir de laquelle ils s'étendent, la base (53) du premier capteur raccordant la chemise à vide (12) du flacon à l'enceinte annulaire (55), des moyens (28, 29) étant montés sur la seconde portion pour fermer l'enceinte annulaire, la base (42) de l'autre capteur étant raccordée thermiquement à l'enceinte (10), un membre de conduction thermique (44) dans le tube de l'autre capteur et raccordé thermiquement à la base (42), et une jonction thermique raccordant ledit membre (44) à un membre (35) raccordé thermiquement au détecteur (21), caractérisé en ce que la chemise à vide (30) est fermée de manière étanche, et le membre (44) et le membre (35) sont construits pour avoir des dimensions et des coéfficients thermiques d'expansion tels qu'ils sont engageables de manière libérable à une première température ambiante et qu'une force de serrage radiale est appliquée entre ceux-ci après le refroidissement du membre (44) en réponse au fluide cryogénique dans ladite enceinte (10).

**2.** Système selon la revendication 1, dans lequel la jonction thermique est formée du fait que ledit membre (44) présente une extrémité comportant une cavité pour recevoir une saillie du membre (35).

**3.** Système selon la revendication 1 ou la revendication 2, dans lequel le détecteur (21) comprend une portion de base (28), ledit membre de conduction (35) étant monté sur ladite portion de base et étant entouré par un moyen de joint de compression (56) définissant ladite chemise (30).

**4.** Système selon la revendication 3, comprenant en outre un moyen de joint à soufflet (36) raccordé entre ladite portion de base (28) et l'extrémité à cavité du membre (44).

**5.** Système selon l'une quelconque des revendications 1 à 4, comprenant en outre un moyen d'enveloppe (60) entourant lesdits capteurs de transition (41, 52) et renfermant un volume entre ledit moyen à détecteur (21) et ladite enceinte (10) pour définir une enceinte fermée entre ceux-ci.

**6.** Système selon la revendication 5, comprenant en outre un moyen de circuit (58) pour être monté à l'intérieur du moyen d'enveloppe (60).

**7.** Système selon l'une quelconque des revendications 1 à 6, dans lequel lesdits capteurs de transition (41, 52) définissent trois enceintes capables d'être mises sous vide, une première enceinte comprenant ladite enceinte (55), une seconde enceinte comprenant l'espace à l'intérieur dudit tube (45), et une troisième enceinte comprenant une enceinte à l'intérieur dudit tube (52) et à l'extérieur desdits moyens (28, 29).

FIG.1

EP 0 265 486 B1

FIG.2

FIG.3

FIG.4

EP 0 265 486 B1

FIG.5

FIG.6

FIG.7

EP 0 265 486 B1